# EUROPEAN PATENT APPLICATION

(11) **EP 1 030 246 A2**
(43) Date of publication of application: **23.08.2000**
(21) Application number: 00300086.6
(22) Date of filing: 07.01.2000
(51) Int. Cl.: G06F 17/21

(54) **Report production in object-oriented computer systems**

(30) Priority: 19.02.1999 GB 9903736
(71) Applicant: International Computers Limited, London, EC2 A1SL (GB)
(72) Inventor: Muckley, Stuart, Shinfield Reading Berkshire RG2 8SX (GB)
(74) Representative: Guyatt, Derek Charles

(57) **Abstract**

In response to a user (6) requesting printing/viewing of a report selected from a list of report type options, a respective object (7, 10) provides the appropriate document template (9) for the report type and provides the data required for insertion into the template from a table (8) of a database object (5), which also includes a database (4). The business objects (1, 2, 3) provide the data stored in the database (4). The data required for a particular report is extracted into the table (8) from the database (4). Previously printed/viewed reports can be reprinted/reviewed by identifying them in the table (8), but new table entries are required to be generated for reports not previously printed/viewed, and if necessary additional data can be sought from the business objects (1, 2, 3). The template with the inserted data is presented as a printed or viewable document in dependence on the selected option.

## Description

This invention relates object-oriented computer systems, in particular to report production and specifically to printing reports and techniques for allowing uniform access to printable/viewable data.

Object-oriented computer architectures involve the use of objects to represent real world entities of interest. An object is a self-contained software package. Objects include data and functions (or methods) that operate on that data.

In conventional systems, as used for example in local government, reports are generated, that is printed documents are produced, by working directly with data stored in a database and rendering selected parts of it into something printable, in response to the employment of an appropriate dialogue with the system corresponding to, for example, a request for a report concerning annual billing for Council tax of a particular property. This approach is not applicable to object-oriented systems, where data is stored in different ways.

According to one aspect of the present invention there is provided a method for use in producing reports in an object-oriented computer system comprising a plurality of objects, which reports can be viewed and/or printed, comprising the steps of:
(a) in response to a user requesting printing or viewing of a said report, providing a template for said report,
(b) inserting data required for said report into the template, and
(c) in dependence on the user's request, printing or displaying the template with the inserted data,
the data required for said report being contained within a table, and the table together with a database comprising a said object, wherein when the database contains the required data but the report has not previously been printed or viewed, further including the step of extracting the required data from the database into the table, and wherein when the database does not contain the required data, further including the step of generating the required data from data held by other said objects of the system.

According to another aspect of the present invention there is provided an object-oriented computer system, including a plurality of objects, for producing reports which can be viewed and/or printed, comprising:
(a) user interface means whereby a user can request viewing or printing of a said report;
(b) means for generating a report template corresponding to the said report;
(c) means for inserting data required for the said report into the report template;
(d) a database object comprising a database and a table, the data required for the said report being contained within the table, and
(e) means for printing or displaying the report template with the inserted data in dependence on the user's request,
   and comprising
(f) means for extracting the required data from the database into the table when the said report has not previously been printed or viewed, and
(g) means for generating the required data from data held by other said objects of the system, when the database does not contain the required data, and storing it in the database.

According to another aspect of the present invention there is provided a computer-readable storage medium having a program recorded thereon, the program serving to produce reports by performing the steps of :
(a) in response to a user requesting printing or viewing of a said report, providing a template for said report,
(b) inserting data required for said report into the template, and
(c) in dependence on the user's request, printing or displaying the template with the inserted data,
the data required for said report being contained within a table, and the table together with a database comprising a said object, wherein when the database contains the required data but the report has not previously been printed or viewed, further including the step of extracting the required data from the database into the table, and wherein when the database does not contain the required data, further including the step of generating the required data from data held by other said objects of the system.

Embodiments of the invention will now be described with reference to the accompanying drawings, in which:
Fig 1 illustrates schematically an object-oriented architecture based system for producing printed documents or viewing reports with or without subsequently printing them,
Fig 2 illustrates a flow diagram for online printing or viewing of individual reports.

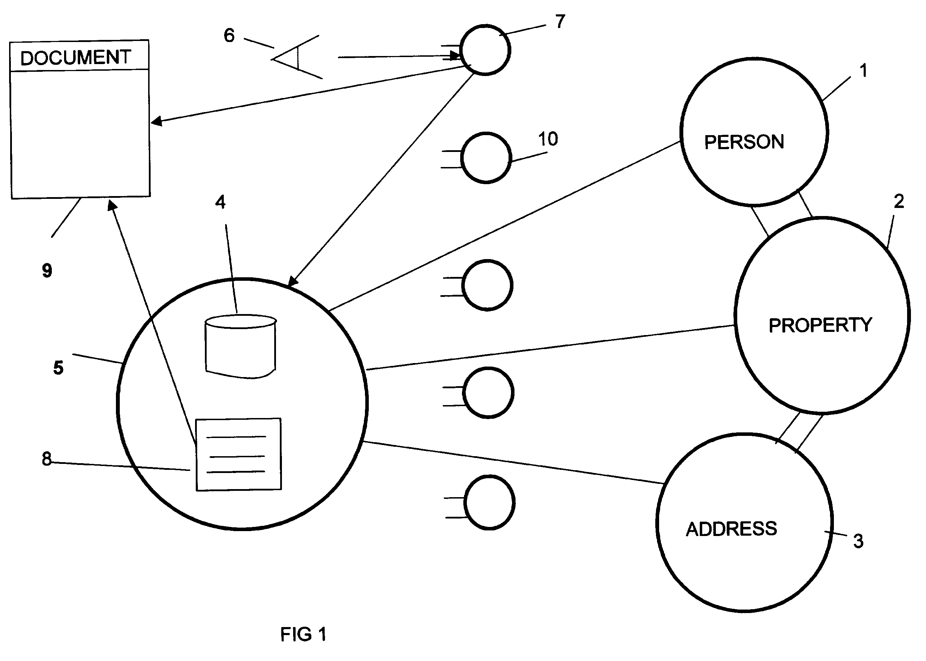

Referring firstly to Fig 1, the object-oriented architecture employed by the present invention includes a plurality of Business Objects 1, 2 and 3 which represent real-world concepts such as, in a local government Council Tax scenario; person, property and address. The Business objects are linked together as indicated schematically, so that, for example, each can be interrogated for details. A person can thus be "asked" which property they live at, or a property can be "asked" which persons live there. This Business Object data (information), which is persistent data, is stored in respective areas of a database 4 (Storage / retrieval system).

The database 4 is itself combined (wrapped up) with appropriate software into a database object 5, which also contains table means 8. The Business Objects 1, 2 and 3 are linked to the database object 5 for the inputting to and extraction of information therefrom.

In a basic form, to produce a printed document, a user 6 simply requests a print object 7 to provide the required type of document, and the appropriate information is extracted from the database 4 into an entry of table 8, which can then be inserted into a basic "blank" document or form (template) 9. If the data is not already in the database, it can alternatively be generated from it, or other data extracted from the Business Objects and input thereto. In a particular envisaged local government application, users will access/ operate the system using an Intranet-based applications and a Web browser.

The interface provided to the user can comprise a plurality of print objects, each of which automatically provides a respective type of report, by extracting the appropriate data and inserting into the appropriate form (template). For example, print object 7 may provide an annual billing report, print object 10 may provide a report containing details of the members of a household, etc. To the user the interface for printing looks the same no matter what type of report is required. If the user requires an annual billing report, they employ the annual billing print object 7 simply by asking for an annual billing report. Print object 7 then extracts the relevant data from the database 4, where it has been stored by the business objects, and inserts it into an appropriate entry in table 8. This entry is then taken and the data contained therein inserted into an annual billing blank document 9.

A printed document can be produced therefrom directly or the document can be merely viewed and subsequently printed. The printed/viewed document is basically produced from the database object 5 in response to a request to a print object. If a member of household report was required, the user 6 would instead request this of print object 10, which would extract the appropriate information into a different entry in table 8, for subsequent insertion into a members of household blank document 9 and printing or viewing as required.

When a report has been printed on a particular date, for example, the table entry produced during the course of this, which is maintained and acts as an audit record, will allow it to be reprinted at a subsequent date if required, no matter what new information has been input to the database in the meantime. The appropriate table entry merely needs locating and a request to print again made.

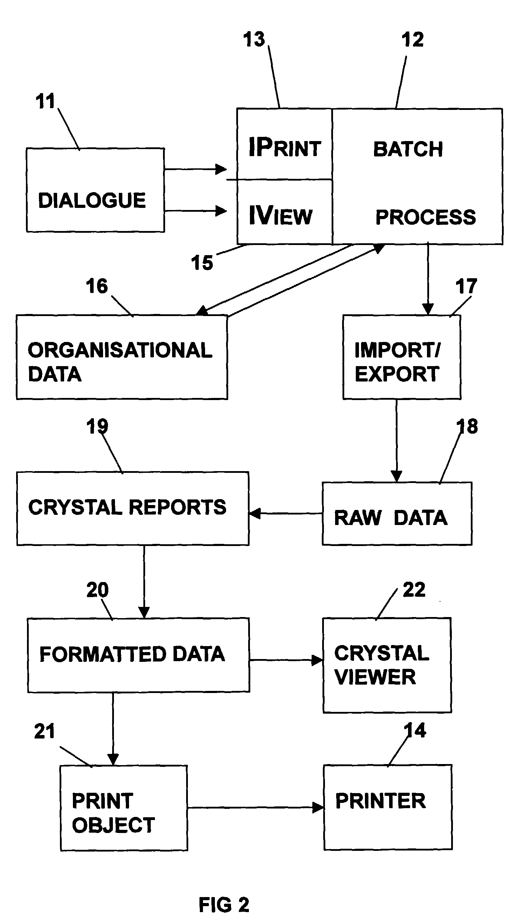

Fig 2 illustrates an example of the process flow employed in the system of Fig 1 in greater detail. It specifically employs Seagate Software's Crystal Reports for the printing/viewing aspect, but this is only by way of example. Otherwise, the invention may be implemented on any known computer system capable of supporting object-oriented processing. For example, the system may comprise an ICL XtraServer, running Microsoft Transaction Server (MTS) Software and Microsoft's Internet Explorer 4 as the Web browser. The example shown in Fig 2 relates to a specific system where printing falls into two categories: batch and on-line. The former are generally high volume and destined for a central printer, whereas the latter are requested as needed by a user, and generally destined for a local printer. It is the latter with which the invention is basically concerned. On-line printing can be considered as a specific instance of batch printing.

A user requests a print of a document using a task specific dialogue 11. This creates an instance 12 of an appropriate batch process application object and access to which is via IPrint interface 13. (Application objects provide processes that can be performed on the Business Objects. A batch process application object provides a way of performing batch processing operations using the services of a particular application object.) The fact that the IPrint interface 13 is used will force the subsequent output to be directed to a local printer 14.

Alternatively, the user may request a view of a document via a task specific dialogue. This can be the same dialogue as for print, if it offers all supported options. Again an instance of the appropriate batch process application object is created but it is accessed using the IView interface 15, and the fact that this interface is used will force the subsequent output to be directed to viewer 22. When a view of a document is requested, the dialogue can implement a print button, so that a user can action a print after viewing. The same process will be followed but this time accessing the IPrint interface.

After creation of the instance 12, the data is extracted from the organisational data 16, which corresponds to database 4 of Fig 1, and passed to import/export component 17, which processes it and dynamically creates a database table, which corresponds to table 8 of Fig 1 and is shown in Fig 2 as raw data component 18. A Crystal Reports Engine 19 is then dynamically bound to the table (datasource) created by the import/export component 17. Engine 19 reads the information in the table (raw data) and produces formatted output at 20 based on a pre-defined Crystal Reports template, for example an annual billing template. If the user requests a print, the batch application object instance will create an instance of the Crystal Reports engine for use at 19 and open the required report file, obtaining the latter from the import/export database. The formatted output at 20 is sent to print object 21, which is a driver/spooler etc not a print object 7, 10 as in Fig 1. The fact that the IPrint interface is used will force output to print object 21 and ultimately printer 14. Print object 21 processes the formatted output and sends it to the actual printer 14 for physical representation. If the user requests a view, once the data has been exported and formatted as above, it will be diverted to the Crystal viewer 22, which may be a Java viewer. This provides a "print-preview" functionality, allowing the user to view a printable version of a report without physically printing it.

As will be appreciated from the above, all of the objects which are capable of printing data, such as 7 and 10 of Fig 1, expose a standard interface which allows them to either print a report from existing data or to print a report and generate whatever data it needs. In addition, these objects also expose another standard interface which allows users to view "printed" (i.e. a facsimile of what would be/ has been printed) data on a screen, whether they are accessing it via a web browser or some other client. In other words, uniform access is allowed to printable/viewable data. It allows ease of use and cohesion, that is if a user wishes to print a report on Household Owners they simply go to the Household Owner print object and ask it to print. The user will not appreciate that they are using print objects, they will simply select printing/viewing of a particular report from a list of options (menu) for a particular property, person, time period etc, and it will be produced.

## Claims

1. A method for use in producing reports in an object-oriented computer system comprising a plurality of objects (1, 2, 3, 5, 7, 10), which reports can be viewed and/or printed, comprising the steps of:
(a) in response to a user (6) requesting printing or viewing of a said report, providing a template (9) for said report,
(b) inserting data required for said report into the template (9), and
(c) in dependence on the user's request, printing or displaying the template with the inserted data,
the data required for said report being contained within a table (8), and the table (8) together with a database (4) comprising a said object (5), wherein when the database (4) contains the required data but the report has not previously been printed or viewed, further including the step of extracting the required data from the database (4) into the table (8), and wherein when the database (4) does not contain the required data, further including the step of generating the required data from data held by other said objects of the system (1, 2, 3).

2. A method as claimed in claim 1, wherein a plurality of report types are producible and the template provided corresponds to the type of report requested by the user.

3. A method as claimed in claim 2, wherein the user selects the required report type from a list of options, corresponding to which options are respective objects (7, 10) each exposing respective interfaces for printing and viewing.

4. An object-oriented computer system, including a plurality of objects (1, 2, 3, 5, 7, 10; 2, 21), for producing reports which can be viewed and/or printed, comprising:
(a) user interface means (6, 7, 10; 11, 13, 15) whereby a user can request viewing or printing of a said report;
(b) means (7, 10; 13, 15) for generating a report template (9; 19) corresponding to the said report;
(c) means (7, 10; 13, 15) for inserting data required for the said report into the report template (9; 19);
(d) a database object (5) comprising a database (4; 16) and a table (8; 18), the data required for the said report being contained within the table, and
(e) means (7, 10; 14, 22) for printing or displaying the report template with the inserted data in dependence on the user's request,
and comprising
(f) means (4, 8; 12, 16, 17) for extracting the required data from the database (8; 16) into the table (8; 18) when the said report has not previously been printed or viewed, and
(g) means for generating the required data from data held by other said objects of the system, when the database does not contain the required data, and storing it in the database (4; 16).

5. A computer system as claimed in claim 4, wherein a plurality of reports types are producible and the report template generating means serves to provide the appropriate template type for the type of report requested by the user.

6. A computer system as claimed in claim 5 wherein the user interface means includes a list of options of available report types, wherein a respective object corresponds to each report type, and wherein each object of the interface means provides respective interfaces for printing and viewing.

7. A computer-readable storage medium having a program recorded thereon, the program serving to produce reports by performing the steps of :
(a) in response to a user (6) requesting printing or viewing of a said report, providing a template (9) for said report,
(b) inserting data required for said report into the template (9), and
(c) in dependence on the user's request, printing or displaying the template with the inserted data,
the data required for said report being contained within a table (8), and the table (8) together with a database (4) comprising a said object (5), wherein when the database (4) contains the required data but the report has not previously been printed or viewed, further including the step of extracting the required data from the database (4) into the table (8), and wherein when the database (4) does not contain the required data, further including the step of generating the required data from data held by other said objects of the system (1, 2, 3).
